# EUROPÄISCHE PATENTSCHRIFT

(11) **EP 3 808 604 B1**
(45) Veröffentlichungstag und Bekanntmachung des Hinweises auf die Patenterteilung: **18.06.2025**
(21) Anmeldenummer: 20195295.9
(22) Anmeldetag: 09.09.2020
(51) Int. Cl.: B60R 1/06, F16C 11/06

(54) **VERSTELLEINHEIT FÜR EIN INDIREKTES SICHTSYSTEM**
ADJUSTMENT UNIT FOR INDIRECT VISION SYSTEM
UNITÉ DE RÉGLAGE POUR UN SYSTÈME DE VISION INDIRECT

(30) Priorität: 14.10.2019 DE 102019215773
(43) Veröffentlichungstag der Anmeldung: 21.04.2021
(73) Patentinhaber: MEKRA Lang GmbH & Co. KG, 91465 Ergersheim (DE)
(72) Erfinder: LANG, Werner, 91465 Ergersheim (DE); POPP, Albrecht, 91629 Weihenzell (DE); GEUDER, Franziska, 91587 Adelshofen (DE)
(74) Vertreter: Winter, Brandl - Partnerschaft mbB

(56) Entgegenhaltungen:
- WO-A1-2007/126190
- DE-A1- 102014 011 232
- DE-C1- 10 163 318

## Beschreibung

Die vorliegende Offenbarung betrifft eine Verstelleinheit für ein indirektes Sichtsystem nach Anspruch 1 sowie ein Verfahren zur Montage einer solchen Verstelleinheit nach Anspruch 18.

Für die Anwendung von Verstelleinheiten bei indirekten Sichtsystemen bei Fahrzeugen, wie Spiegeln oder Kameras, gibt es eine Vielzahl von technischen Lösungen, wiesie z. B in der WO2002/072386A1 oder der EP1728682A1 beschrieben sind. Jedoch gibt es keine technischen Lösungen, die die Anbindung an das Sichtsystem im kleinstmöglichen Bauraum bereitstellen, und dennoch für robuste mechanische Anforderungen geeignet sind. Auch verschiedene Fügerichtungen sind aktuell auf engem Bauraum schwierig umzusetzen.

Aus der DE 1020111 01534B4 ist eine Verstelleinheit für Rückspiegel an Kraftfahrzeugen bekannt, bei der eine erste und eine zweite Komponente durch ein Hauptverbindungselement schwenkbar miteinander verbunden sind. Das Hauptverbindungselement umfasst ein Federelement, das die erste und die zweite Komponente gegeneinander verspannt.

Aus der DE10163318C1 ist eine Verstelleinheit für ein indirektes Sichtsystem mit einer ersten und einer zweiten Komponente bekannt, die mittels einem Hauptverbindungselement schwenkbar miteinander verbunden sind. Die zweite Komponente umfasst ein Druckverteilelement, das durch ein Federelement mit Druck beaufschlagt wird.

Aus der EP0269081A1 ist eine Spiegelverstelleinheit mit zwei Komponenten bekannt, die über ein Hauptverbindungselement schwenkbar miteinander und mit einer Tragstruktur verbunden sind, wobei die beiden Komponenten durch ein Federelement gegeneinander verspannt sind.

Aus der DE19644824C1, der US4824065A und der WO2007/126190A1 ist jeweils eine Spiegelverstelleinrichtung mit zwei Komponenten bekannt, die über ein Hauptverbindungselement schwenkbar miteinander und mit einer Tragstruktur verbunden sind, Die Verbindung zwischen dem Hauptverbindungselement und der Tragstruktur erfolgt bei der DE19644824C1 und der US4824065A über eine Schraubverbindung und bei der WO2007/126190A1 über eine Verriegelungsgemometrie.

Aus der DE102004029229A1 ist es bekannt ist es bekannt den Spiegelkopf eines Fahrzeugaußenspiegels mittels Schnappverbindungen mit dem am Fahrzeug befestigten Spiegelfuß zu verbinden.

Weiterer Stand der Technik ist aus der DE 10 2014 011 232 A1 bekannt.

Ausgehend von der DE10163318C1 ist es Aufgabe der Erfindung, eine Verstelleinheit bereitzustellen, die mit möglichst wenigen Verbindungselementen an einer Tragstruktur eines indirekten Sichtsystems verbunden ist. Dabei soll die Schnittstelle der Verstelleinheit zur Tragstruktur in einem kleinen Bauraum robusten mechanischen Anforderungen standhalten.

Die Lösung dieser Aufgabe erfolgt durch die Merkmale des Anspruchs 1.

Dadurch, dass das Druckverteilelement der zweiten Komponente durch das Hauptverbindungselement mit Druck beaufschlagt ist, werden die mittig auf das Druckverteilelement und damit auf die zweite Komponente eingeleiteten Kräfte gleichmäßig in der in Richtung quer zum Hauptverbindungselement verteilt. Der Kraftschluss mit der Tragstruktur erfolgt daher nicht mehr zentral, sondern verteilt über die Quererstreckung der zweiten Komponente. Damit können Maßveränderungen durch Alterung - Kriechverhalten von Kunststoffen - kompensiert werden und ein Verzug der einzelnen Bauteile wird verringert. Zudem ergibt sich eine geschickte Sandwich-Bauweise, die einen direkten Kraftfluss zwischen Tragstruktur und erster und zweiter Komponente ermöglicht.

Gemäß einer bevorzugten Ausführungsform greift das Federelement an einer Kontaktfläche im oberen Randbereich des Hauptverbindungselements, z. B. an einem umlaufenden Kragen an und verspannt die erste und zweite Komponente zueinander - Anspruch 2.

Gemäß einer vorteilhaften Ausgestaltung erfolgen die Verbindung zwischen der ersten und zweiten Komponente mittels dem Hauptverbindungselement und das Verspannen der beiden Komponenten zueinander mittels dem Federelement derart, dass eine axiale Längsbewegung entlang der Längsrichtung des Hauptverbindungselements möglich ist. Hierdurch vereinfacht sich die Schwenkbewegung zwischen der ersten und zweiten Komponente und es werden alterungsbedingte Formänderungen aufgefangen - Anspruch 3.

Gemäß einer vorteilhaften Ausgestaltung erfolgt die Verbindung zwischen der zweiten Komponente und der Tragstruktur durch eine direkte Verbindung zwischen dem unteren Endbereich des Hauptverbindungselements. Auf diese Weise werden die Anzahl der benötigten Bauteile und der für die Verbindung notwendige Bauraum minimal - Anspruch 4.

Alternativ erfolgt die Verbindung zwischen der Tragstruktur und dem Hauptverbindungselement nicht durch ein direktes Eingreifen des Hauptverbindungselements in die Tragstruktur, sondern mittels eines Befestigungselements, das in der Tragstruktur und in dem Hauptverbindungselement verankert ist - Anspruch 5.

Das Befestigungselement ist vorzugsweise eine Schraube oder ein Verriegelungsbolzen, der aus die Tragstruktur durchdringt und in dem Hauptverbindungselement verankert ist oder der das Hauptverbindungselement durchdringt und in der Tragstruktur verankert ist. In beiden Fällen ergibt sich eine platzsparende Verbindung - Anspruch 6.

Auch die Verbindung zwischen Hauptverbindungselement und zweiter Komponente und Hauptverbindungselement und Tragstruktur erfolgt vorzugsweise mittels angeformter Schraubverbindung, angeformter Clipsverbindung oder angeformter Verriegelungsgeometrie - Anspruch 7.

Das Hauptverbindungselement kann entweder in der zweiten Komponente zur Anlage kommen oder es durchsetzt die zweite Komponente und kommt auf der Tragstruktur zur Anlage - Anspruch 8.

Die Druckbeaufschlagung des Druckverteilelements durch das Hauptverbindungselement erfolgt auf einfache Weise durch eine axiale Längsbewegung des Hauptverbindungselements bei der Verbindung der ersten und zweiten Komponente und/oder der Verbindung des Hauptverbindungselements mit der Tragstruktur. Durch diese axiale Längsbewegung werden die erste und zweite Komponente zusätzlich zueinander verspannt - Anspruch 9.

Das Druckverteilelement besteht in vorteilhafter Weise aus einem elastischen Material und/oder einer elastischen Geometrie, so dass es durch die Druckbeaufschlagung verformt wird und unter mechanischer Spannung steht. Durch diesen Federspeichereffekt können Verformungen der Kunststoffkomponenten (z. B. erste und zweite Komponente) und auch Fertigungstoleranzen aufgefangen bzw. ausgeglichen werden - Anspruch 10.
Diese Elastizität wird auf einfache Weise durch eine Ausgestaltung des Druckverteilelements in Form einer Metallplatte erreicht. Als vorteilhaft haben sich hierbei nachfolgende Dimensionen ergeben. Das plattenförmige Druckverteilelement weist eine Fläche zwischen 1000 mm² und 3200 mm², eine Längenausdehnung L von 50 bis 80 mm, eine Breitenausdehnung B von 20 bis 40 mm und eine Dicke von 1 bis 3 mm auf - Anspruch 11.

Durch die vorteilhaften Ausgestaltungen nach Anspruch 12 ist das Druckverteilelement im eingebauten Zustand nahezu unbeweglich, während das Federelement axiale Längsbewegungen und eine Schwenkbewegung zwischen der ersten und zweiten Komponente zulässt.

Durch die vorteilhaften Ausgestaltungen nach Anspruch 13 ergibt sich eine Sandwich-Bauweise, die einen direkten Kraftfluss zwischen Tragstruktur und erster und zweiter Komponente ermöglicht.

Das Druckverteilelement weist wenigstens zwei und vorzugsweise wenigstens drei Kontaktbereiche zur zweiten Komponente auf. Über diese Kontaktbereiche erfolgt der Kraftfluss zwischen Hauptverbindungselement, zweiter Komponente und Tragstruktur - Anspruch 14. Durch die räumliche Nähe der Kontaktbereiche der zweiten Komponente zum Druckverteilelement mit den Kontaktstellen der zweiten Komponente zur Tragstruktur verbessert sich der Kraftfluss zwischen Hauptverbindungselement, zweiter Komponente und Tragstruktur zusätzlich - Anspruch 15.

Gemäß einer vorteilhaften Ausgestaltung sind die erste und zweite Komponente zueinander motorisch verschwenkbar - Anspruch 16.

Durch eine Adapterplatte zwischen zweiter Komponente und Tragstruktur lassen sich auf einfache Weise an unterschiedliche Tragstrukturen integrieren - Anspruch 17.

Durch die Vormontage von erster und zweiter Komponente durch das Hauptverbindungselement zu einer Einheit - Anspruch 18 - vereinfacht sich die Montage der Verstelleinheit erheblich, da nach der Vormontage nur noch ein einzelnes Bauteil mit der Tragstruktur verbunden werden muss.

Weitere Einzelheiten, Merkmale und Vorteile der Erfindung ergeben sich aus der nachfolgenden Beschreibung bevorzugter Ausführungsformen anhand der Zeichnung.

Es zeigt
Fig. 1 eine Schnittdarstellung einer beispielhaften Ausgestaltung der Verstelleinheit, wobei die Verbindung zur Tragstruktur noch nicht hergestellt ist;
Fig. 2 eine perspektivische Darstellung einer Aufsicht auf die Seite der zweiten Komponente, die auf der Tragstruktur zu liegen kommt;
Fig. 3 eine perspektivische Darstellung einer Aufsicht auf das Druckverteilelement zwischen erstem und zweitem Bauteil der zweiten Komponente in Richtung der ersten Komponente betrachtet;
Fig. 4 eine perspektivische Darstellung des Druckverteilelements aus Fig. 1 bis 3;
Fig. 5 eine Fig. 1 entsprechende Schnittdarstellung in montiertem Zustand, gemäß einer ersten Variante;
Fig. 6 eine Fig. 1 entsprechende Schnittdarstellung in montiertem Zustand, gemäß einer zweiten Variante;
Fig. 7 eine Fig. 1 entsprechende Schnittdarstellung in montiertem Zustand, gemäß einer dritten Variante;
Fig. 8 eine Fig. 1 entsprechende Schnittdarstellung in montiertem Zustand, gemäß einer vierten Variante;
Fig. 9 eine Fig. 1 entsprechende Schnittdarstellung in montiertem Zustand, gemäß einer fünften Variante; und
Fig. 10 eine Fig. 1 entsprechende Schnittdarstellung in montiertem Zustand, gemäß einer sechsten Variante.

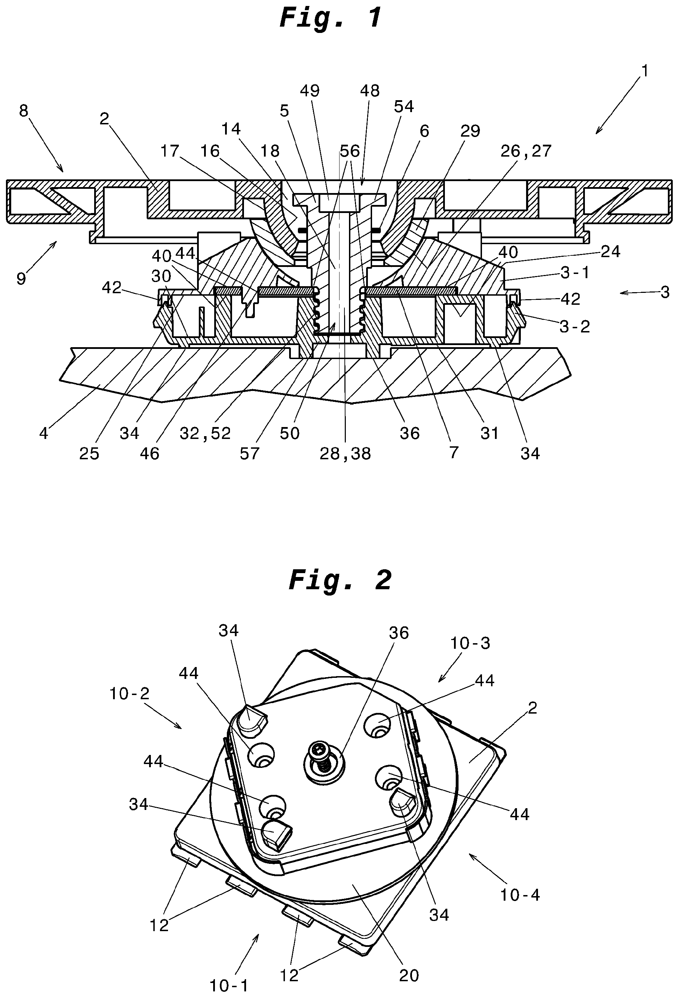

Fig. 1 zeigt eine vereinfachte Schnittdarstellung einer beispielhaften Ausgestaltung der Verstelleinheit 1 mit einer ersten Komponente 2, einer zweiten Komponente 3, einer Tragstruktur 4 und einem Hauptverbindungselement 5. Die zweite Komponente 3 umfasst ein erstes Bauelement 3-1 und ein zweites Bauelement 3-2 mit einem Druckverteilelement 7 dazwischen. Durch das Hauptverbindungselement 5 werden die erste und die zweite Komponente 2, 3 schwenkbar miteinander verbunden. Fig. 2 zeigt eine perspektivische Darstellung einer Ansicht auf die Seite der zweiten Komponente in Fig. 1, die auf der Tragstruktur zu liegen kommt. In den Figuren 1 und 2 ist die Tragstruktur 4 noch nicht mit den übrigen Komponenten verbunden.

Die erste Komponente 2 ist eine rechteckige Profilstruktur aus Kunststoff mit einer Oberseite 8 und einer Unterseite 9 sowie vier Seitenkanten 10-1 bis 10-4. An gegenüberliegenden Seiten 10-1 und 10-3 sind Haltelemente 12 für eine Klemmschiebeverbindung nach EP0609508B1 vorgesehen. Zentral weist die erste Komponente 2 eine halbkugelförmige Ausbuchtung oder Vertiefung 14 mit einer konvexen und einer konkaven Seite 16, 17 auf. Die Ausbuchtung 14 weist eine zentrale Öffnung 18 auf.

Das erste Bauteil 3-1 der zweiten Komponente 3 weist eine Oberseite 24 und eine Unterseite 25 auf. In der Oberseite 24 ist eine halbkugelförmige Vertiefung 26 mit einer konkaven Gleitfläche 27 vorgesehen, die komplementär zu der konvexen Seite 17 der Ausbuchtung 14 ausgebildet ist. Das erste Bauteil 3-1 umfasst eine zentrale Öffnung 28, die mit der zentralen Öffnung 18 fluchtet. Zwischen der konvexen Seite 17 der Ausbuchtung 14 und der konkaven Gleitfläche 27 ist ein Gleitelement 29 angeordnet, wie es aus der EP1346161B1 bekannt ist. Das zweite Bauteil 3-2 der zweiten Komponente 3 ist als Hohlprofil ausgebildet, das eine Oberseite 30, eine Unterseite 31 und zentral ein Innengewinde 32 aufweist, das mit den zentralen Öffnungen 18 und 28 fluchtet. Auf der Unterseite 31 sind im äußeren Randbereich drei Kontaktstellen 34 vorgesehen, die im montierten Zustand an der Tragstruktur 4 anliegen. Unter dem Innengewinde 32 ist auf der Unterseite 31 des zweiten Bauteils 3-2 ein rohrförmiger Anlagebereich 36 vorgesehen, der im montierten Zustand ebenfalls an der Tragstruktur 4 anliegt.

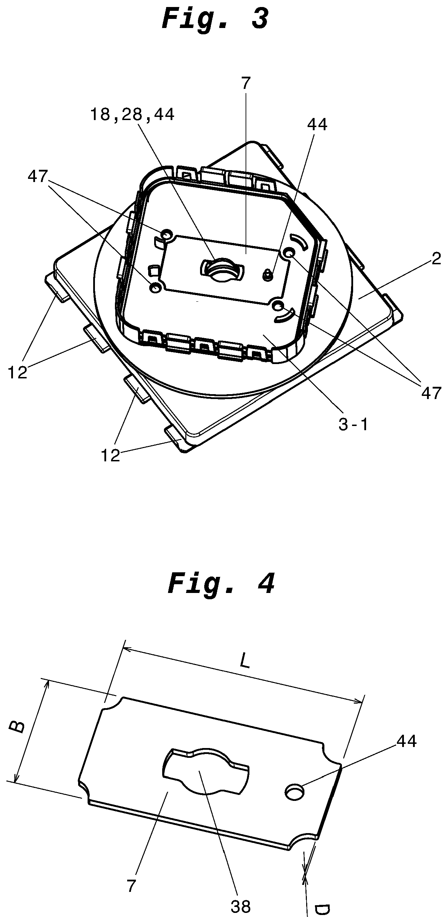

Zwischen dem ersten und zweiten Bauteil 3-1, 3-2 ist das Druckverteilelement 7 in Form einer Metallplatte angeordnet. Das Druckverteilelement bzw. die Druckverteilerplatte 7 ist durch das erste und zweite Bauteil 3-1 und 3-2 vollständig umschlossen. Wie aus Fig. 3 und 4 zu ersehen ist, weist das Druckverteilelement 7 eine zentrale Öffnung 38 auf, die mit den zentralen Öffnungen 18 und 28 und mit dem Innengewinde 32 fluchtet. Sowohl das erste Bauteil 3-1 als auch das zweite Bauteil3-2 weisen Kontaktflächen 40 auf, die in Kontakt mit dem Druckverteilelement 7 stehen. Das plattenförmige Druckverteilelement 7 liegt an wenigstens drei Kontaktflächen 40 auf dem zweiten Bauteil 3-2 auf. Um den Kraftfluss zwischen dem Hauptverbindungselement, der zweiten Komponente 3 und der Tragstruktur 4 zu optimieren, sind die Kontaktflächen 40 in räumlicher Nähe zu den Kontaktstellen 34 auf der Unterseite 31 des zweiten Bauteils 3-2 angeordnet. Über eine Nut- und Feder-Verbindung im äußeren Randbereich stützen sich die beiden Bauteile 3-1 und 3-2 aufeinander ab und sind miteinander verbunden. Das plattenförmige Druckverteilelement 7 weist eine Fixieröffnungen 44 auf, in die ein entsprechender Fixierdorne 46 an dem ersten oder zweiten Bauteil 3-i eingreifen. Die Druckverteilplatte 7 weist abgerundete Ecken auf, die Platz für Fixierelemente 47 lassen, durch die das erste und zweite Bauteil 3-1, 3-2 der zweiten Komponente 3 miteinander verbunden sind.

Das Hauptverbindungselement 5 ist als Hohldorn ausgebildet und umfasst einen oberen Endbereich 48 und einen unteren Endbereich 50. Im oberen Endbereich ist ein Sitz 49 für einen Schraub- oder Riegelbolzenkopf versenkt angeordnet. Der untere Endbereich 50 umfasst ein Außengewinde 52, das zu dem Innengewinde 32 im zweiten Bauteil 3-2 passt. Das Hauptverbindungselement 5 durchsetzt die zentralen Öffnungen 18, 22 und 38 und wird in das Innengewinde 32 eingeschraubt. Im oberen Endbereich 48 ist ein umlaufender Kragen 54 vorgesehen. Zwischen dem umlaufenden Kragen 54 und dem Rand der zentralen Öffnung 18 in der Ausbuchtung 14 ist das Federelement 6 in Form einer Spiralfeder angeordnet. Das Außengewinde 52 des Hauptverbindungselements 5 wird in einem mittleren Bereich des Hauptverbindungselements 5 durch einen umlaufenden Anschlag 56 begrenzt. Das Innengewinde 32 endet in einem Gewindesitz 57 in Form eines umlaufenden Kragens.

Durch Einschrauben des Hauptverbindungselements 5 mit der Spiralfeder 6 in das Innengewinde 32 wird zum einen die erste Komponente 2 gegen die zweite Komponente verspannt und durch den Anschlag 56 wird das plattenförmige Druckverteilelement 7 mit Druck beaufschlagt. Durch das Druckverteilelement 7 wird die Druckbeaufschlagung durch das Hauptverbindungselement 5 quer zur Längsrichtung des Hauptverbindungselements 5 verteilt, so dass die Kraftübertragung zwischen der Tragstruktur 4 und der zweiten Komponente 3 nicht hauptsächlich über den rohrförmigen Anlagebereich 36, sondern gleichverteilt auch über die Kontaktstellen 34 erfolgt. Das Außengewinde 52 und das Innengewinde 32 weisen ein Gewindespiel auf.

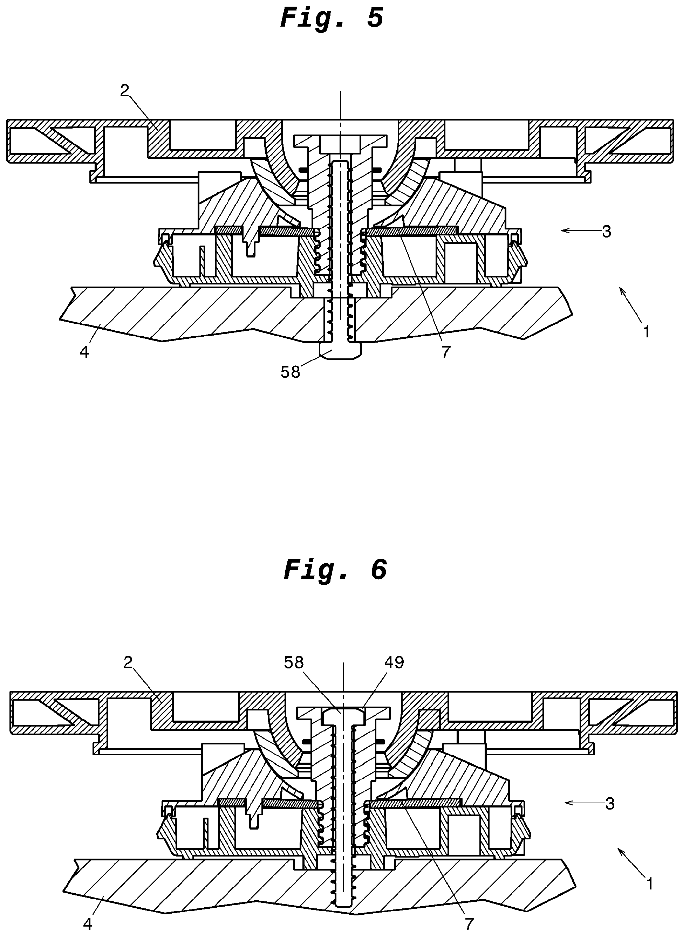

Die Figuren 5 und 6 zeigen zwei Varianten der Verbindung der Tragstruktur 4 mit den übrigen Komponenten mittels eines Befestigungselements in Form einer Schraube 58. In der ersten Variante nach Fig. 5 durchsetzt die Schraube 58 die Tragstruktur 4 und wird in das Hauptverbindungselement 5 in Form eines Hohldorns eingeschraubt. In der zweiten Variante nach Fig. 6 wird die Schraube 58 von dem Hauptbefestigungselement aus in die Tragstruktur 4 eingeschraubt und der Schraubkopf kommt in dem versenkten Sitz 49 zu liegen. Durch das Gewindespiel zwischen Innengewinde 32 und Außengewinde 52 wird beim Verbinden der Tragstruktur 4 mit den übrigen Komponenten zusätzlich durch eine leichte axiale Verschiebung des Hauptverbindungselements 5 zusätzlich Druck auf das Druckverteilelement 7 ausgeübt, das sich dadurch leicht verformt, wie dies in den Figuren 5 und 6 gezeigt ist. Auch dieser zusätzliche Druckwird durch das plattenförmige Druckverteilelement 7 in Querrichtung verteilt, durch die beiden Bauteil 3-2 und 3-2 aufgenommen und gleichmäßig über die Kontaktstellen 34 und den Anlagebereich 36 abgeleitet.

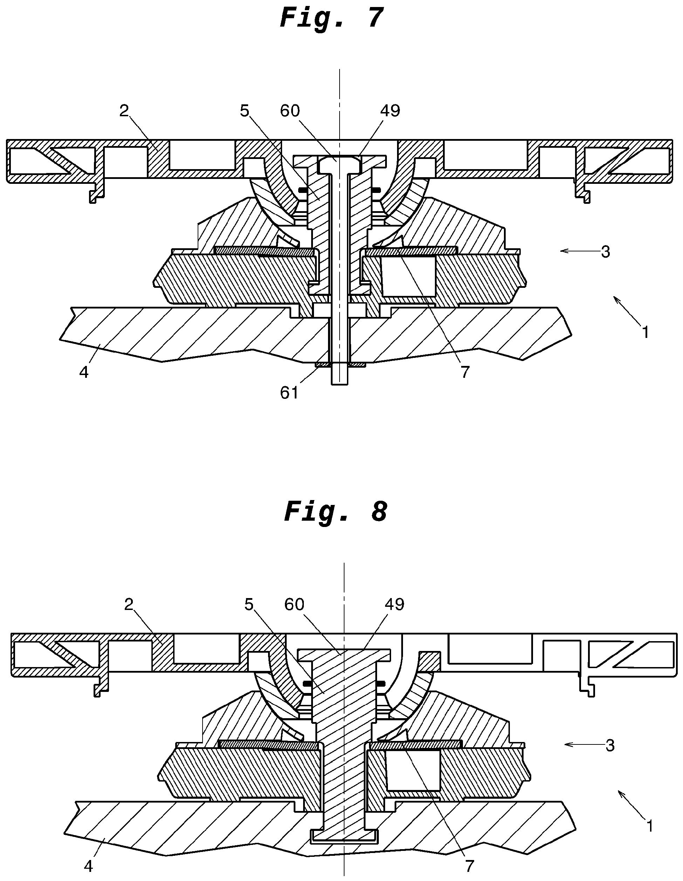

Figur 7 zeigt eine dritte Variante der Verbindung der Tragestruktur 4 mit den übrigen Komponenten mittels eines Befestigungselements in Form eines Riegelbolzens 60. Der Riegelbolzen 60 durchsetzt sowohl das Hauptverbindungselement 5 als auch die Tragstruktur 4, stützt sich in dem versenkten Sitz 49 ab und wird an einer Oberfläche der Tragstruktur 4 oder in der Tragstruktur 4 durch einen Verriegelungssplint 61 gesichert. Das Hauptverbindungselement 5 benötigt kein Außengewinde und das zweite Bauteil 3-2 der zweiten Komponente 3 weist kein entsprechendes Innengewinde auf. Durch entsprechenden Druck auf den Riegelbolzen 60 ergibt sich ebenfalls eine zusätzliche Verformung des Druckverteilelements 7 und ebenso eine Querverteilung der Kräfte auf die Kontaktstellen 34.

Fig. 8 zeigt eine vierte Variante der Erfindung, bei der das Hauptverbindungselement nicht als Hohldorn ausgeführt ist und der untere Endbereich 50 des Hauptverbindungselements 5 nach Art eines Bajonettverschlusses in der Tragstruktur 4 verankert ist. Auch bei dieser Variante umfasst das Hauptverbindungselement 5 kein Außengewinde und das zweite Bauteil 3-2 der zweiten Komponente 3 weist kein entsprechendes Innengewinde auf.

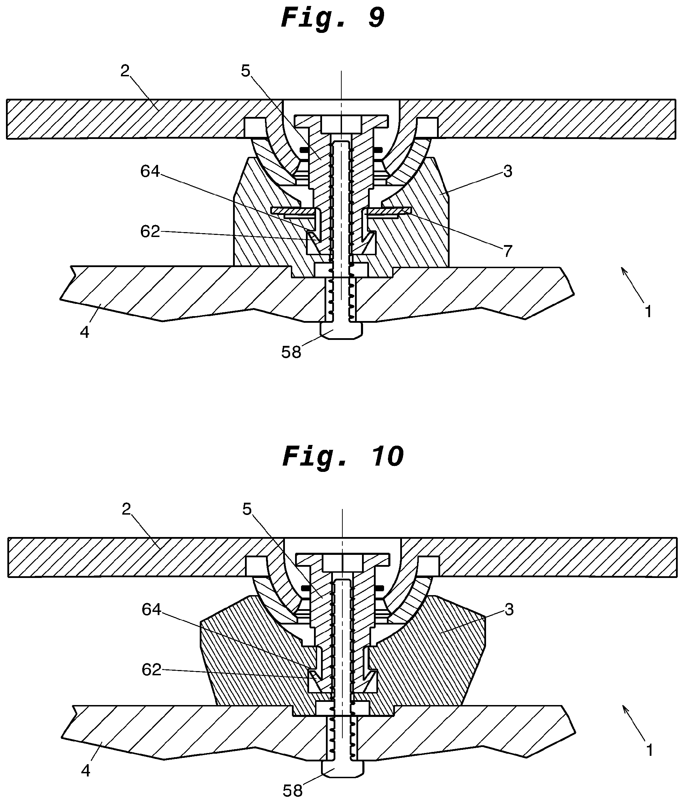

Fig. 9 zeigt eine fünfte Variante der Erfindung mit einer einteiligen zweiten Komponente 3 in die die Druckverteilerplatte 7 integriert ist und die eine zentrale Öffnung 28 aufweist. Der untere Endbereich 50 des Hauptverbindungselements 5 weist eine über den Umfang des Hauptverbindungselements 5 verteilt angeordnete Schnappeinrichtung 62 auf, der sich in radialer Richtung nach innen verformen lässt. Die zweite Komponente 3 weist in der zentralen Öffnung 28 im Bereich des unteren Endbereichs 50 einen umlaufenden Vorsprung 64 oder einzelne Vorsprünge 64 auf. Zur Vormontage wird das Hauptverbindungselement 5 mit der ersten Komponente 2 in die zentrale Öffnung 28 der zweiten Komponente 3 gedrückt bis die Schnappeinrichtung 62 den/die Vorsprung/Vorsprünge 64 hintergreift und die beiden Komponenten 2 und 3 miteinander verbindet. Die Verbindung mit der Tragstruktur 4 erfolgt wie bei der ersten Variante nach Fig. 5 mit einer Schraube 58, die die Tragstruktur 4 durchsetzt und in das Hauptverbindungselement 5 eingeschraubt ist.

Fig. 10 zeigt eine sechste Variante der Erfindung, die sich von der fünften Variante lediglich dadurch unterscheidet, dass kein Druckverteilelement vorgesehen ist. Der Zweck der sechsten Variante besteht darin die beiden Komponenten 2 und 3 in einer Vormontage mittels der Clipsverbindung miteinander zu verbinden und dann die beiden Komponenten zusammen mit der Tragstruktur zu verbinden. Durch die Vormontage bzw. der Verbindung der beiden Komponenten 2, 3 und dem Hauptverbindungselement 5 mit Federelement 6 mittels Clips- oder Schnappverbindung 62, 64 muss nur noch ein Teil mit der Tragstruktur 4 verbunden werden. Hierdurch wird die Montage erheblich vereinfacht.

Die verschiedenen Verbindungsvarianten zwischen dem Hauptverbindungselement 5 und dem zweiten Bauteil 3 und dem Hauptverbindungselement 5 und der Tragstruktur 4 nach den Figuren 5 bis 10, d. h. Schraubverbindung, Verriegelungselemente, Clipsverbindung, Bajonettverbindung können miteinander kombiniert werden, so dass sich neben den in den Figuren gezeigten Varianten weitere Varianten der Verbindung ergeben und von der vorliegenden Erfindung umfasst werden.

In den Figuren 5 bis 10 sind aus Gründen der Übersichtlichkeit nur die für die jeweilige Ausführungsform relevanten Bezugszeichen eingezeichnet.

Durch die leichte axiale Verschiebung des Hauptverbindungselements 5 aufgrund des Gewindespiels zwischen dem Innengewinde 32 und dem Außengewinde 52 bzw, aufgrund des fehlenden Gewindes ist es möglich die Lagetoleranzen zwischen den Kontaktflächen 40 der zweiten Komponente 3 zum Druckverteilelement 5 auszugleichen. Auch alterungsbedingte Formveränderungen können dadurch ausgeglichen werden. Die Befestigung der gesamten Verstelleinheit 1 ist auf engstem Bauraum möglich, da das Befestigungselement das Hauptverbindungselement 5 durchdringt. Auch ist in vorteilhafter Weise nur ein einziges Befestigungselement oder einer Variante kein zusätzliches Befestigungselement erforderlich, was die Anzahl der Teile verringert und zusätzlich den Bauraum verkleinert.

### Bezugszeichenliste:

- 1: Verstelleinheit
- 2: erste Komponente
- 3: zweite Komponente
- 3-1: erstes Bauteil von 3
- 3-2: zweites Bauteil von 3
- 4: Tragstruktur
- 5: Hauptverbindungselement
- 6: Federelement
- 7: Druckverteilelement
- 8: Oberseite von 2
- 9: Unterseite von 2
- 10-i: Seitenkanten von 2
- 12: Haltelemente an 2 für Klemmschiebeverbindung
- 14: halbkugelförmige Ausbuchtung bzw. Vertiefung an/in 2
- 16: konkave Seite von 14
- 17: konvexe Seite von 14
- 18: zentrale Öffnung in 14
- 24: Oberseite von 3-1
- 25: Unterseite von 3-1
- 26: halbkugelförmige Vertiefung in 3-1
- 27: konkave Gleitfläche in 26
- 28: zentrale Öffnung in 26, 27
- 29: Gleitelement zwischen 17 und 27
- 30: Oberseite von 3-2
- 31: Unterseite von 3-2
- 32: Innengewinde in 3-2
- 34: Kontaktstellen an 31 zu 4
- 36: rohrförmiger Anlagebereich an 31 zu 4
- 38: zentrale Öffnung in 7
- 40: Kontaktflächen an 3-i zu 7
- 42: Nut- und Federverbindung zwischen 3-1 und 3-2
- 44: Fixieröffnungen in 7
- 46: Fixierdorne an 3-1 oder 3-2
- 47: Fixierelemente
- 48: oberer Endbereich von 5
- 49: versenkter Sitz in 5
- 50: unterer Endbereich von 5
- 52: Außengewinde an 43
- 54: umlaufender Kragen an 5
- 56: umlaufender Anschlag an 5
- 57: Gewindesitz in 3-2
- 58: Befestigungselement Schraube
- 60: Befestigungselement Riegelbolzen
- 61: Verriegelungssplint
- 62: Schnappeinrichtung
- 64: umlaufender Vorsprung oder mehrere Vorsprünge an 3 in 28

## Patentansprüche

1. Verstelleinheit (1) für ein indirektes Sichtsystem für ein Fahrzeug, mit einer ersten Komponente (2), die mit einer indirekten Sichtkomponente verbindbar ist,
einer zweiten Komponente (3), die mit einer Tragstruktur (4) des indirekten Sichtsystems verbunden ist,
wobei die erste Komponente (2) und die zweite Komponente (3) mittels ersten und zweiten Kontaktflächen (17, 27) schwenkbar zueinander gelagert sind, einem Hauptverbindungselement (5) mit einem der ersten Komponente (2) zugewandtem oberen Endbereich (48) und einem der zweiten Komponente (3) zugewandtem unteren Endbereich (50), wobei das Hauptverbindungselement (5) die erste und zweite Komponente (2, 3) schwenkbar miteinander verbindet, und einem Federelement (6), das die erste und zweite Komponenten (2, 3) miteinander verspannt,
wobei die zweite Komponente (3) ein Druckverteilelement (7) umfasst, das sich quer zur Längsrichtung des Hauptverbindungselements (5) erstreckt, und wobei das Druckverteilelement (7) durch das Hauptverbindungselement (5) mit Druck beaufschlagt ist,
so dass das Druckverteilelement (7) den Druck des Hauptverbindungselements (5) über die Quererstreckung der zweiten Komponente (3) auf die Tragstruktur (4) ableitet, **dadurch gekennzeichnet,**
**dass** die zweite Komponente (3) ein erstes, der ersten Komponente (2) zugewandtes Bauteil (3-1) und ein zweites, der Tragstruktur (4) zugewandtes Bauteil (3-2) aufweist und dass das Druckverteilelement (7) zwischen dem ersten und zweiten Bauteil (3-1, 3-2) angeordnet ist und dass das Druckverteilelement (7) im äußeren Randbereich wenigstens zwei Kontaktbereiche (40) zum ersten und zweiten Bauteil (3-1, 3-2) der zweiten Komponente (3) aufweist.

2. Verstelleinheit nach Anspruch 1, **dadurch gekennzeichnet, dass** das Federelement (6) an einer Kontaktfläche (54) am oberen Endbereich (48) des Hauptverbindungselements (5) und an der ersten Komponente (2) angreift und damit die erste Komponente (2) mit der zweiten Komponente (3) verspannt.

3. Verstelleinheit nach Anspruch 1 oder 2, **dadurch gekennzeichnet, dass** die Verbindung von erster und zweiter Komponente (2, 3) mittels dem Hauptverbindungselement (5) und dem Federelement (6) so ausgestaltet sind, dass eine axiale Längsbewegung der ersten Komponente (2) entgegen der Federkraft des Federelements (6) möglich ist.

4. Verstelleinheit nach einem der vorhergehenden Ansprüche, **dadurch gekennzeichnet, dass** das Hauptverbindungselement (5) mit dem unteren Endbereich (50) mit der Tragstruktur (4) verbunden ist.

5. Verstelleinheit nach einem der vorhergehenden Ansprüche 1 bis 3, **dadurch gekennzeichnet, dass** das Hauptverbindungselement (5) mit dem unteren Endbereich (50) mit der zweiten Komponente (3) verbunden ist, dass ein Befestigungselement (58, 60) das Hauptverbindungselement (5) mit der Tragstruktur (4) verbindet, und dass das Befestigungselement (58, 60) das Hauptverbindungselement (5) durchdringt und in der Tragstruktur (4) verankert ist oder dass das Befestigungselement (58, 60) die Tragstruktur (4) durchdringt und in dem Hauptverbindungselement (5) verankert ist.

6. Verstelleinheit nach Anspruch 5, **dadurch gekennzeichnet, dass** das Befestigungselement (58, 60) und das Hauptverbindungselement (5) mittels angeformter Schraubverbindung (58) oder angeformter Verriegelungsgeometrie (60) verbunden sind.

7. Verstelleinheit nach einem der vorhergehenden Ansprüche, **dadurch gekennzeichnet, dass** das Hauptverbindungselement (5) und die zweite Komponente (3) oder das Hauptverbindungselement (5) und die Tragstruktur (4) mittels angeformter Schraubverbindung (32, 52), angeformter Clipsverbindung oder angeformter Verriegelungsgeometrie verbunden sind.

8. Verstelleinheit nach einem der vorhergehenden Ansprüche, **dadurch gekennzeichnet, dass** das Hauptverbindungselement (5) mit der ersten Komponente (2) oder das Hauptverbindungselement (5) mit der Tragstruktur (4) zur Auflage kommt.

9. Verstelleinheit nach einem der vorhergehenden Ansprüche, **dadurch gekennzeichnet, dass** die Druckbeaufschlagung des Druckverteilelements (7) durch axiale Längsbewegung des Hauptverbindungselements (5) erfolgt.

10. Verstelleinheit nach einem der vorhergehenden Ansprüche, **dadurch gekennzeichnet, dass** das Druckverteilelement (7) elastisch ist und sich aufgrund der Druckbeaufschlagung durch das Hauptverbindungselement (5) verformt.

11. Verstelleinheit nach einem der vorhergehenden Ansprüche, **dadurch gekennzeichnet, dass** das Druckverteilelement (7) plattenförmig ausgebildet ist und insbesondere aus einem metallischen Werkstoff besteht.

12. Verstelleinheit nach einem der vorhergehenden Ansprüche, **dadurch gekennzeichnet, dass** das Material des Federelements (6) einen geringeren Elastizitätsmodul als das Material des Druckverteilelements (7) aufweist und das insbesondere das Federelement (6) eine geringere Federkonstante als das Druckverteilelement (7) bei Belastung in Einbaulage aufweist.

13. Verstelleinheit nach einem der vorhergehenden Ansprüche, **dadurch gekennzeichnet, dass** die zweite Komponente (3) mit dem Druckverteilelement (7) und die Tragstruktur (4) durch das Hauptverbindungselement (5) fest miteinander verbunden sind.

14. Verstelleinheit nach einem der vorhergehenden Ansprüche, **dadurch gekennzeichnet, dass** die zweite Komponente (3) wenigstens drei Kontaktbereiche (40) zum Druckverteilelement (7) aufweist, die im äußeren radialen Randbereich der zweiten Komponente (3) angeordnet sind.

15. Verstelleinheit nach einem der vorhergehenden Ansprüche, **dadurch gekennzeichnet, dass** die wenigstens zwei Kontaktbereiche (40) der zweiten Komponente (3) zum Druckverteilelement (7) in räumlicher Nähe zu den Kontaktstellen (34) der zweiten Komponente (3) zur Tragstruktur (4) liegen und dass der Abstand zwischen den Kontaktbereichen (40) der zweiten Komponente (3) und den Kontaktstellen (34) vorzugsweise 5 - 50mm und insbesondere 5 - 20mm beträgt.

16. Verstelleinheit nach einem der vorhergehenden Ansprüche, **dadurch gekennzeichnet, dass** die erste und zweite Komponente (2, 4) motorisch zueinander verschwenkbar sind.

17. Verstelleinheit nach einem der vorhergehenden Ansprüche, **dadurch gekennzeichnet, dass** eine Adapterplatte zwischen der zweiten Komponente (2) und der Tragstruktur (4) angeordnet ist.

18. Verfahren zur Montage einer Verstelleinheit nach einem der vorhergehenden Ansprüche, mit den Verfahrensschritten:
a) Verbinden der ersten und zweiten Komponente zu einer Einheit durch das Hauptverbindungselement, und
b) Verbinden der Einheit aus Schritt a) mit der Tragstruktur.

## Claims

1. An adjustment unit (1) for an indirect vision system for a vehicle, comprising a first component (2) connectable to an indirect vision component,
a second component (3) connected to a support structure (4) of the indirect vision system,
the first component (2) and the second component (3) being supported pivotably to one another by way of first and second contact surfaces (17, 27),
a main connecting element (5) including an upper end portion (48) facing the first component (2), and a lower end portion (50) facing the second component (3), the main connecting element (5) pivotably connecting the first and second component (2, 3) with each other, and a spring element (6) bracing the first and second component (2, 3) with one another,
the second component (3) including a pressure distribution element (7) extending transversely to a longitudinal direction of the main connecting element (5),
and wherein the pressure is applied to the pressure distribution element (7) by the main connecting element (5),
so that the pressure distribution element (7) releases the pressure of the main connecting element (5) to the support structure (4) through the second component (3) being extended transversely **characterized in that**
the second component (3) has a first element (3-1) facing the first component (2) and a second element (3-2) facing the support structure (4), and that the pressure distribution element (7) is arranged between the first element and the second element (3-1, 3-2), and that the pressure distribution element (7), in its outer edge area, has at least two contact areas (40) with the first and second element (3-1, 3-2) of the second component (3).

2. The adjustment unit according to claim 1, **characterized in that** the spring element (6) engages on a contact surface (54) at an upper end portion (48) of the main connecting element (5) and on the first component (2), thus bracing the first component (2) with the second component (3).

3. The adjustment unit according to claim 1 or 2, **characterized in that** the connection of first and second component (2, 3) by means of the main connecting element (5) and the spring element (6) is configured such that an axial longitudinal movement of the first component (2) against the spring force of the spring element (6) is possible.

4. The adjustment unit according to one of the preceding claims, **characterized in that** the main connecting element (5) is connected to the support structure (4) with lower end portion (50).

5. The adjustment unit according to one of the preceding claims, **characterized in that** the main connecting element (5) is connected through the lower end portion (50) with the second component (3), that the main connecting element (5) is connected to the support structure (4) by a fastener (58, 60), and that the fastener (58, 60) penetrates the main connecting element (5) and is anchored in the support structure (4), or that the fastener (58, 60) penetrates the support structure (4) and is anchored in the main connecting element (5).

6. The adjustment unit according to claim 5, **characterized in that** the fastener (58, 60) and the main connecting element (5) are connected by means of an integral screw connection (58) or integral locking geometry (60).

7. The adjustment unit according to any of the preceding claims, **characterized in that** the main connecting element (5) and the second component (3), or the main connecting element (5) and the support structure (4) are connected by means of an integral screw connection (32, 52), integral clip connection or integral locking geometry.

8. The adjustment unit according to one of the preceding claims, **characterized in that** the main connecting element (5) comes to rest with the first component (2), or the main connecting element (5) comes to rest with the support structure (4).

9. The adjustment unit according to one of the preceding claims, **characterized in that** pressurization of the pressure distribution element (7) is performed by an axial longitudinal movement of the main connecting element (5).

10. The adjustment unit according to one of the preceding claims, **characterized in that** the pressure distribution element (7) is elastic and is deformed on account of pressure being applied by the main connecting element (5).

11. The adjustment unit according to one of the preceding claims, **characterized in that** the pressure distribution element (7) has the shape of a plate and in particular is made of a metallic material.

12. The adjustment unit according to one of the preceding claims, **characterized in that** the material of the spring element (6) has a lower modulus of elasticity than the material of the pressure distribution element (7) and that in particular the spring element (6) under load in an installation position, has a lower spring constant than the pressure distribution element (7).

13. The adjustment unit according to one of the preceding claims, **characterized in that** the second component (3) is firmly connected with the pressure distribution element (7) and the support structure (4) through the main connecting element (5).

14. The adjustment unit according to one of the preceding claims, **characterized in that** the second component (3) has at least three contact areas (40) with the pressure distribution element (7), which are located in an outer radial edge area of the second component (3).

15. The adjustment unit according to one of the preceding claims, **characterized in that** the at least two contact areas (40) of the second component (3) with the pressure distribution element (7) are in spatial proximity to the contact points (34) of the second component (3) to the support structure (4) and that the distance between the contact areas (40) of the second component (3) and the contact points (34) preferably is 5 - 50 mm and in particular 5 - 20 mm.

16. The adjustment unit according to one of the preceding claims, **characterized in that** the first component and the second component (2, 3) can be pivoted to one another by motor power.

17. The adjustment unit according to one of the preceding claims, **characterized in that** an adapter plate is arranged between the second component (2) and the support structure (4).

18. Method for assembling an adjustment unit according to one of the preceding claims, comprising the steps of
a) connecting the first and second component through the main connecting element to form one unit, and
b) connecting the unit from step a) to the support structure.

## Revendications

1. Unité de réglage (1) pour un système de vision indirect pour un véhicule avec un premier composant (2) qui peut être connecté à un composant de vision indirect,
un second composant (3) qui est connecté à une structure de support (4) du système de vision indirect,
dans laquelle le premier composant (2) et le second composant (3) sont montés de manière pivotante l'un à l'autre au moyen de première et seconde surfaces de contact (17, 27), d'un élément de connexion principal (5) avec une zone d'extrémité supérieure (48) tournée vers le premier composant (2) et une zone d'extrémité inférieure (50) tournée vers le second composant (3), dans laquelle l'élément de connexion principal (5) connecte de manière pivotante les premier et second composants (2, 3) entre eux, et un élément de ressort (6) qui serre les premier et second composants (2, 3) entre eux,
dans laquelle le second composant (3) comprend un élément de répartition de pression (7) qui s'étend transversalement à la direction longitudinale de l'élément de connexion principal (5), et dans lequel l'élément de répartition de pression (7) est soumis à une pression par l'élément de connexion principal (5),
de sorte que l'élément de répartition de pression (7) dérive la pression de l'élément de connexion principal (5) sur la structure de support (4) par l'intermédiaire de l'extension transversale du second composant (3), **caractérisée en ce que**
le second composant (3) présente une première pièce (3-1) tournée vers le premier composant (2) et une seconde pièce (3-2) tournée vers la structure de support (4) et **en ce que** l'élément de répartition de pression (7) est disposé entre les première et seconde pièces (3-1, 3-2) et **en ce que** l'élément de répartition de pression (7) présente dans la zone de bord extérieure au moins deux zones de contact (40) avec la première et la seconde pièces (3-1, 3-2) du second composant (3).

2. Unité de réglage selon la revendication 1, **caractérisée en ce que** l'élément de ressort (6) s'engage sur une surface de contact (54) au niveau de la zone d'extrémité supérieure (48) de l'élément de connexion principal (5) et sur le premier composant (2) et serre ainsi le premier composant (2) avec le second composant (3).

3. Unité de réglage selon la revendication 1 ou 2, **caractérisée en ce que** la connexion des premier et second composants (2, 3) au moyen de l'élément de connexion principal (5) et de l'élément de ressort (6) est conçue de sorte qu'un mouvement longitudinal axial du premier composant (2) est possible à l'encontre de la force de ressort de l'élément de ressort (6).

4. Unité de réglage selon l'une quelconque des revendications précédentes, **caractérisée en ce que** l'élément de connexion principal (5) est connecté à la structure de support (4) par la zone d'extrémité inférieure (50).

5. Unité de réglage selon l'une quelconque des revendications précédentes 1 à 3, **caractérisée en ce que** l'élément de connexion principal (5) est connecté par la zone d'extrémité inférieure (50) au second composant (3), **en ce qu'**un élément de fixation (58, 60) connecte l'élément de connexion principal (5) à la structure de support (4), et **en ce que** l'élément de fixation (58, 60) traverse l'élément de connexion principal (5) et est ancré dans la structure de support (4) ou **en ce que** l'élément de fixation (58, 60) traverse la structure de support (4) et est ancré dans l'élément de connexion principal (5).

6. Unité de réglage selon la revendication 5, **caractérisée en ce que** l'élément de fixation (58, 60) et l'élément de connexion principal (5) sont connectés au moyen d'un raccord à vis (58) formé ou d'une géométrie de verrouillage (60) formée.

7. Unité de réglage selon l'une quelconque des revendications précédentes, **caractérisée en ce que** l'élément de connexion principal (5) et le second composant (3) ou l'élément de connexion principal (5) et la structure de support (4) sont connectés au moyen d'un raccord à vis (32, 52) formé, d'une connexion par clips formée ou d'une géométrie de verrouillage formée.

8. Unité de réglage selon l'une quelconque des revendications précédentes, **caractérisée en ce que** l'élément de connexion principal (5) vient en appui sur le premier composant (2) ou l'élément de connexion principal (5) vient en appui sur la structure de support (4).

9. Unité de réglage selon l'une quelconque des revendications précédentes, **caractérisée en ce que** la mise sous pression de l'élément de répartition de pression (7) s'effectue par un mouvement longitudinal axial de l'élément de connexion principal (5).

10. Unité de réglage selon l'une quelconque des revendications précédentes, **caractérisée en ce que** l'élément de répartition de pression (7) est élastique et se déforme en raison de la mise sous pression exercée par l'élément de connexion principal (5).

11. Unité de réglage selon l'une quelconque des revendications précédentes, **caractérisée en ce que** l'élément de répartition de pression (7) est en forme de plaque et est constitué en particulier d'un matériau métallique.

12. Unité de réglage selon l'une quelconque des revendications précédentes, **caractérisée en ce que** le matériau de l'élément de ressort (6) présente un module d'élasticité inférieur à celui du matériau de l'élément de répartition de pression (7) et **en ce que**, en particulier, l'élément de ressort (6) présente une constante de ressort inférieure à celle de l'élément de répartition de pression (7) lorsqu'il est chargé en position de montage.

13. Unité de réglage selon l'une quelconque des revendications précédentes, **caractérisée en ce que** le second composant (3) avec l'élément de répartition de pression (7) et la structure de support (4) sont fermement connectés entre eux par l'élément de connexion principal (5).

14. Unité de réglage selon l'une quelconque des revendications précédentes, **caractérisée en ce que** le second composant (3) présente au moins trois zones de contact (40) avec l'élément de répartition de pression (7) qui sont disposées dans la zone de bord radiale extérieure du second composant (3).

15. Unité de réglage selon l'une quelconque des revendications précédentes, **caractérisée en ce que** les au moins deux zones de contact (40) du second composant (3) avec l'élément de répartition de pression (7) se situent à proximité spatiale des points de contact (34) du second composant (3) avec la structure de support (4) et **en ce que** la distance entre les zones de contact (40) du second composant (3) et les points de contact (34) est de préférence de 5 - 50 mm et en particulier de 5 - 20 mm.

16. Unité de réglage selon l'une quelconque des revendications précédentes, **caractérisée en ce que** les premier et second composants (2, 4) peuvent pivoter l'un par rapport à l'autre de manière motorisée.

17. Unité de réglage selon l'une quelconque des revendications précédentes, **caractérisée en ce qu'**une plaque d'adaptateur est disposée entre le second composant (2) et la structure de support (4).

18. Procédé de montage d'une unité de réglage selon l'une quelconque des revendications précédentes, avec les étapes de procédé consistant à :
a) connecter les premier et second composants en une unité par l'intermédiaire de l'élément de connexion principal, et
b) connecter l'unité de l'étape a) à la structure de support.
